# EUROPÄISCHE PATENTSCHRIFT

(11) **EP 0 961 189 B1**
(45) Veröffentlichungstag und Bekanntmachung des Hinweises auf die Patenterteilung: **23.07.2003**
(21) Anmeldenummer: 99110090.0
(22) Anmeldetag: 22.05.1999
(51) Int. Cl.: G05B 23/02

(54) **Verfahren und Vorrichtung zur Überwachung von Anlagen der chemischen Industrie**
Method and device for monitoring of industrial chemical installations
Procédé et dispositif pour la surveillance des installations industrielles chimiques

(30) Priorität: 27.05.1998 DE 19823599
(43) Veröffentlichungstag der Anmeldung: 01.12.1999
(73) Patentinhaber: BEB ERDGAS UND ERDÖL GMBH, D-30659 Hannover (DE)
(72) Erfinder: Schlemm, Friedrich Dipl.-Ing., 30559 Haanover (DE)
(74) Vertreter: Junius, Walther, Dr.

(56) Entgegenhaltungen:
- EP-A- 0 457 924
- EP-A- 0 591 585
- WO-A-95/08113
- US-A- 4 097 849

## Beschreibung

Die Erfindung betrifft Verfahren und Vorrichtungen zur Überwachung von Anlagen der chemischen Industrie.

In der chemischen Industrie, und zu dieser werden hier auch die Industrien der Erschließung und Nutzung von Lagerstätten flüssiger und gasförmiger Rohstoffe gezählt, und zwar insbesondere Erdöl- und Erdgaslagerstätten, werden Anlagen zur Förderung, zum Transport, zur Verarbeitung und zur Veredelung der Rohstoffe und der aus diesen erhaltenen Halb- und Fertigprodukte sowohl in Räumen als auch oftmals im Freien betrieben. Insbesondere der Betrieb von Anlagen, in denen mit entzündlichen und explosiven Stoffen gearbeitet wird, findet häufig im Freien statt, weil hier aus den Anlagen ungewollt entweichende Stoffe keine oder nur geringfügigere Anlagen- und Gebäudeschäden als in Räumen anrichten können. Entweichen im Laufe der Zeit jedoch größere Mengen an in diesen Anlagen be- und verarbeiteter Stoffe, können erhebliche Umweltschäden entstehen.

Daher ist es notwendig, solche häufig über lange Zeiträume völlig selbstständig arbeitenden Anlagen ständig auf einen einwandfreien Betrieb hin zu kontrollieren und auf Undichtigkeiten der Rohre und Anlagenteile sowie auf Fremd- oder sonstige Einflüsse zu überprüfen. Das erfolgt an Steuerpulten in Betriebsräumen ebenso wie durch in Augenscheinnahme im Freien. Das hierzu eingesetzte Personal verliert im Laufe der Einsatzzeiten häufig an Aufmerksamkeit, weil solche überwachungsaufgaben vom Personal als ermüdend und auch als langweilig empfunden werden.

EP-A-0 591 585 zeigt eine Überwachungseinrichtung, die aus einem Mikrophon, einer Kamera, einem Gassensor und einer Auswertevorrichtung besteht.

Die Erfindung vermeidet die Nachteile des Standes der Technik. Es ist die Aufgabe der Erfindung, mit einfachen Mitteln und in einfacher Weise eine Überwachung solcher Anlagen kostengünstig automatisiert durchzuführen und so Schäden zu vermeiden.

Die Erfindung besteht darin, daß man mittels Mikrophonen oder anderen akustischen Sensoren, Kameras und elektronischen Geruchssensoren elektronische Daten erzeugt und diese einer Auswertvorrichtung mit Vergleichsschaltkreisen, Speichern elektronisch erfaßter Daten und Anzeige- sowie Meldevorrichtungen zuführt, in denen man die temporär erfaßten elektronischen Meßwerte mit Meßwerten einer Anfangsmessung und/oder der vorhergehenden Messung vergleicht und bei Überschreiten vorgegebener Abweichungswerte einen Meldevorgang auslöst.

Hierzu benutzt man eine Vorrichtung, die aus Mikrophonen oder anderen akustischen Sensoren, Kameras, elektronischen,Geruchssensorn und einer Auswertvorrichtung mit Vergleichsschaltkreisen, Speichern elektronisch erfaßter Daten und Anzeige- und/oder Meldevorrichtungen besteht, wobei die Auswertvorrichtung Vergleichsschaltungen aufweist, in denen die temporär erfaßten elektronischen Meßwerte mit Meßwerten einer Anfangsmessung und der vorhergehenden Messung verglichen werden und bei Überschreiten vorgegebener Abweichungswerte ein Meldevorgang ausgelöst wird.

Auf diese Weise gelingt es, die Messungen völlig ohne Personal durchzuführen und völlig automatisch in einer elektronischen Anlage auszuwerten, die im Falle einer Unregelmäßigkeit durch einen Defekt der Anlage Meldung macht.

Die hierzu erforderlichen Messungen und deren Auswertung wird zweckmäßigerweise in bestimmten Zeitabständen ausgeführt. Die dabei erhaltenen Meßwerte werden entweder mit den aus der oder den letzten Messungen erhaltenen Meßwerten verglichen, oder es wird ein Vergleich mit einer bei Inbetriebnahme durchgeführten Messung vorgenommen.

Häufig sind bei zu überwachenden Anlagen eine große Vielzahl von Meßstellen einzurichten. Deren Zahl kann vermindert werden, wenn man den Standort der Mikrophone, Kameras und/oder elektronischen Geruchssensoren nach jeder Messung wechselt. Dazu ist es zweckmäßig, wenn man Meßgeräte auf einem oder mehreren Fahrzeugen montiert, welche Meß- und Beobachtungsgeräte tragen und welche auf Schienen verfahrbar sind.

Erhebliche Probleme bei der Durchführung dieser Messungen und Beobachtungen können bei im Freien aufgebauten Anlagen durch Witterungseinflüsse, insbesondere Wind und Regen, aber auch durch in der Nachbarschaft auftretende Fremdeinflüsse, z.B. aus der Landwirtschaft, Straßenverkehr, Anlagen der chemischen Industrie etc. entstehen. Daher ist es zweckmäßig, die aus den akustischer Sensoren und elektronischen Geruchssensoren erhaltenen elektronischen Meßwerte vor der Zuführung in die Auswertstation mit aus akustischen Vergleichs- Sensoren und elektronischen Vergleichsgeruchssensoren erhaltenen elektronischen Meßwerten zu korrigieren. Diesem Zweck dient eine Korrekturschaltung, die einerseits an die der Überwachung der Anlagenteile dienenden akustischer Sensoren, Kameras und elektronischen Geruchssensoren und andererseits an akustische Vergleichssensoren und elektronische Vergleichsgeruchssensoren angeschlossen ist. Die gegenphasige Überlagerung der Signale aus den akustischen Vergleichssensoren und elektronischen Vergleichsgeruchssensoren über die Signale aus den akustischen Meßsensoren und Geruchssensoren kann Störungen durch Wind, Regen und sonstigen Fremdeinflüs-sen eliminieren.

Bei dieser Meß-und Kontrollarbeit kann man als Kameras insbesondere Videosensoren und Infrarot-Kameras verwenden und in der Auswertanlage Stellen erhöhter oder erniedrigter Temperatur identifizieren. Durch den Austritt eines in einer Rohrleitung unter Druck stehenden Mediums durch ein feines Loch tritt an dieser Stelle Geräusch und eine erhebliche Abkühlung auf. Die Videosensoren setzt man vornehmlich zur Feststellung des Auftretens von betriebsfremden Personen und Naturereignissen wie umgestürzten Bäumen, Feuer etc. ein.

Als akustischen Sensor kann man auch einen mit Mikrophonen bestückten Kunstkopf einsetzen, um die Richtung zu orten, aus dem der Schall kommt.

Bei dieser Meß- und Kontrollarbeit kann man als Mikrophone Körperschallmikrophone verwendet, die an Rohren, Maschinen, Lagern, Pumpen, Druckerzeugern und ähnlichen Anlagenteilen angebracht sind.

Man kann aber auch als akustische Sensoren Richtmikrophone verwenden, die auf bestimmte Anlagenteile gerichtet sind oder deren Wirkrichtung neben bestimmten Anlagenteilen verläuft, z.B. neben zu überwachenden geraden Rohren, bei denen durch Mediumaustritt auftretender Schall erfaßt wird.

Es ist sinnvoll, eine Möglichkeit in der Vorgehensweise und in der Schaltung vorzusehen, daß bei Meldung einer Auffälligkeit der Ablauf des automatisch ablaufenden Meßverfahrens unterbrochen wird und Meßgeräte, insbesondere eine Infrarot- und/oder Videokamera durch Handsteuerung zu der als auffällig gemeldeten Stelle gefahren werden oder auf diese Stelle gerichtet werden.

Von Vorteil kann es auch sein, wenn man auf die als auffällig gemeldete Stelle eine Kontrollsubstanz aufträgt. Hierzu können unter Druck stehende Behälter mit einer Schaum bildenden Flüssigkeit vorgesehen werden, die ausgelöst durch die Kontrollschaltung diese Flüssigkeit auf die auffällig gewordene Stelle sprühen, so daß man dann visuell z.B. mit Hilfe einer Videokamera beobachten kann, ob sich an der auffällig gewordenen Stelle bei austretendem Gas Schaum bildet oder nicht.

Die überwachungsvorrichtung arbeitet zweckmäßigerweise mit einer Schaltung zur Auslösung der Meßvorgänge an verschiedenen Orten der zu überwachenden Anlage in bestimmten Zeitabständen. So wird erreicht, daß alle Meßpunkte in bestimmten Zeitintervallen nacheinander überprüft werden. Dabei ist eine Schaltung zur ständig wiederholten Auslösung des Meßzyklus von Vorteil.

Die Zahl der einzusetzenden Meßgeräte läßt sich durch den Einsatz von verfahr-, verschieb- und/oder verschwenkbaren Trägern der akustischen Sensoren, Kameras und/oder elektronischen Geruchssensor und einer Schaltung für die Veränderung des Meßortes zwischen je zwei Messungen minimieren und dadurch den Anschaffungspreis einer solchen Vorrichtung reduzieren.

Das Wesen der Erfindung ist nachstehend anhand eines in der Zeichnung schematisch dargestellten Ausführungsbeispieles näher erläutert. Es zeigen:
- Fig.1: ein Blockschaltbild einer Anlage mit Überwachungsvorrichtung, deren Sensoren an verschiedenen Stellen der Anlage ein-bzw. angebaut sind.
- Fig.2: eine auf einem Turm installierte Fernüberwachung.
- Fig.3: eine auf einem Wagen installierte Überwachungsvorrichtung.

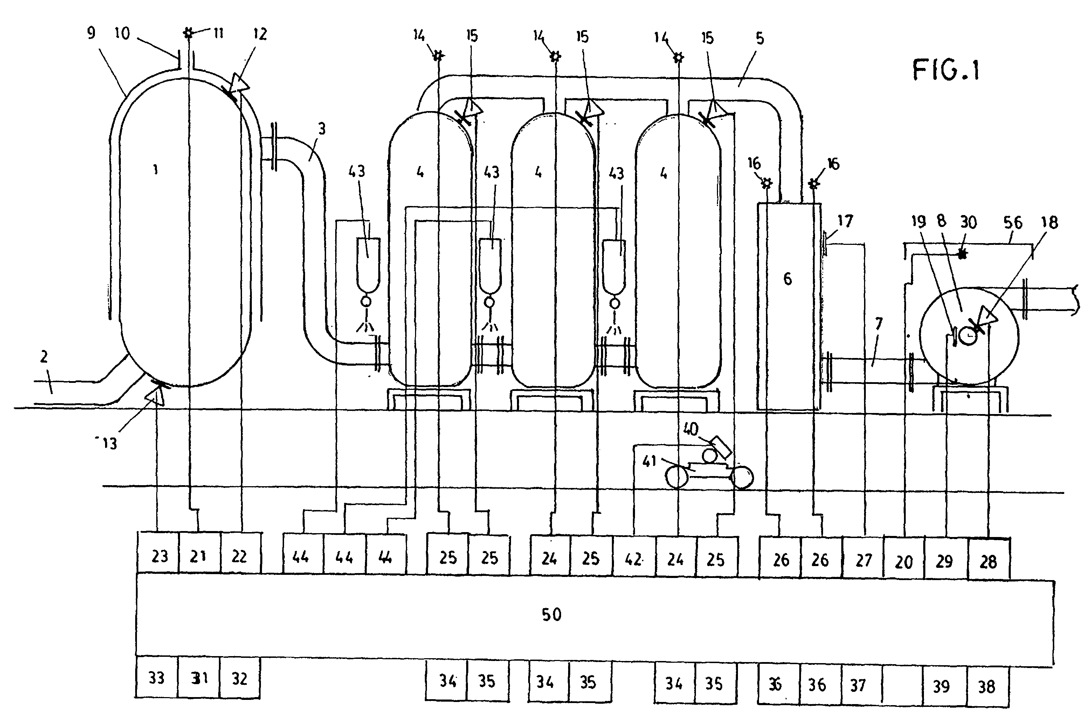

Die Anlage der Fig.1 umfaßt einen Reaktor 1, in den ein zu verarbeitendes gasförmiges Medium durch das Rohr 2 eingeführt wird. Das Reaktionsprodukt wird durch die Rohrleitung 3 Kesseln 4 zugeführt, in denen das Reaktionsprodukt weiterer Behandlung (Waschen, Trocknen, Reinigen oder sonstigen Vorgängen) unterzogen wird. Das die Kessel 4 verlassende Produkt wird durch die Rohrleitung 5 einem Konditioniergefäß 6 zugeführt, das es durch die Leitung 7 verläßt, wonach es im Verdichter 8 auf einen für den Weitertransport geeigneten Druck gebracht wird. In dieser Anlage der Erdöl- und Erdgas fördernden und verarbeitenden Industrie ist der Reaktor 1 in seinem oberen Teil von einer Schutzglocke 9 ummantelt, die Schutz gegen äußere Witterungseinflüsse und anfliegende Gegenstände bietet, ein unkontrolliertes Abkühlen der Reaktoroberfläche verhindert und durch ein Leck austretendes Produkt zunächst auffängt. Diese Schutzglocke 9 weist an ihrem oberen Ende einen ins Freie führenden Stutzen auf.

Die Überwachungsvorrichtung dieser Anlage besteht aus Sensoren, den Sensoren zugeordneten Signalumsetzern, einem Prozessor und Speichern für Vergleichswerte.

Der Reaktor 1 wird von einem Geruchssensor 11 und einem Körperschallmikrofon 12 überwacht. Der Geruchssensor 11 ist in oder über dem Stutzen der Glocke 9 angeordnet. Dort vermag er aus der großflächigen Oberfläche des Reaktors 1 austretendes Gas mit einem spezifischen Gewicht leichter als Luft am ehesten zu riechen, weil dieses durch diesen Stutzen ins Freie abzufließen strebt. Das Körperschallmikrophon 12 vermag das Auftreten von Schallquellen festzustellen, wie sie an Leckstellen durch den Mediumfuß in der Leckstelle auftreten. Da in einem Reaktor oftmals eine unkontrollierte Geräuschbildung erfolgt, ist ein gleichgebautes Vergleichsmikrofon 13 an anderer Stelle des Reaktors angebaut, dessen Ausgangssignale gegenphasig den Ausgangssignalen des akustischen Sensors 12 in einer Schaltung im Inneren des Prozessors 50 überlagert werden, wodurch es möglich wird, Störgeräusche weitgehend zu eliminieren.

Jedem Sensor 11,12,13 ist ein Signalumsetzer 21,22,23 zugeordnet, in welchem im Prozessor 50 verarbeitbare Signale erzeugt werden. Jedem Sensor 11,12,13 ist weiter ein Speicher 31,32,33 für Vergleichswerte aus Messungen kurz nach Betriebsbeginn der Anlage und/oder aus vor der jeweiligen Messung durchgeführten Messungen zugeordnet, so daß für den Betrieb des Prozessors 50 notwendige Vergleichswerte zur Verfügung stehen, die den Normalzustand in dem betreffenden Anlagenteil charakterisieren.

Die Kessel 4 werden durch Geruchssensoren 14, diesen zugeordnete Signalumsetzer 24 und Vergleichswertspeicher 34, sowie Körperschallmikrophone 15 und diesen zugeordnete Signalumsetzer 25 und Vergleichswertspeicher 35 überwacht.

Das Konditioniergefäß 6 wird durch Geruchssensoren 16, diesen zugeordnete Signalumsetzer 26 und Vergleichswertspeicher 36 sowie Temperaturfühler 17 überwacht, wobei die Temperaturfühler 17 an Signalumsetzer 27 und Vergleichsspeicher angeschlossen sind und für die Auswertung im Prozessor 50 Vergleichswertspeicher vorgesehen sind.

Der Verdichter 8 wird durch ein am Lager seines Rotors angebrachtes Körperschallmikrofon 18, einen diesem zugeordneten Signalumsetzer 28 und Vergleichswertspeicher 38, und einen Temperaturfühler 19 sowie diesem zugeordneten Signalumsetzer 29 und Vergleichswertspeicher 39 überwacht. Gegen den Austritt von Gasen wird eine überwachung mittels des Geruchssensors 30 durchgeführt, dem ein Signalumsetzer 20 zugeordnet ist.

Zusätzlich zu dieser Überwachung mittels der Messung von auftretendem Körperschall, Geruch und Temperaturänderungen erfolgt auch eine visuelle Fernüberwachung mittels einer Fernsehkamera 40, die auf einem Wagen 41 montiert ist und deren Signale einem Signalumsetzer 42 zugeführt werden. An besonders kritischen Stellen der Anlage sind Sprühgeräte 43 zum Versprühen einer bei Gasaustritt schaumbildenden Flüssigkeit vorgesehen, die von Signalumsetzern 44 in Tätigkeit gesetzt werden, wenn sie in das Bildfeld der Kamera 40 gelangen.

Das Besondere an dieser Überwachungsvorrichtung ist die Auswertung der durchgeführten Messungen im Prozessor: Hier werden von einer Messung ermittelte Auffälligkeiten in Beziehung gesetzt zu den Ergebnissen anderer Messungen, wodurch erreicht wird, daß Fehlalarm, der durch zufällig auftretende Ereignisse ausgelöst werden könnte, vermieden wird, und daß der Anlagenzustand ohne subjektive Wertungen vom Überwachungspersonal objektiv ermittelt wird.

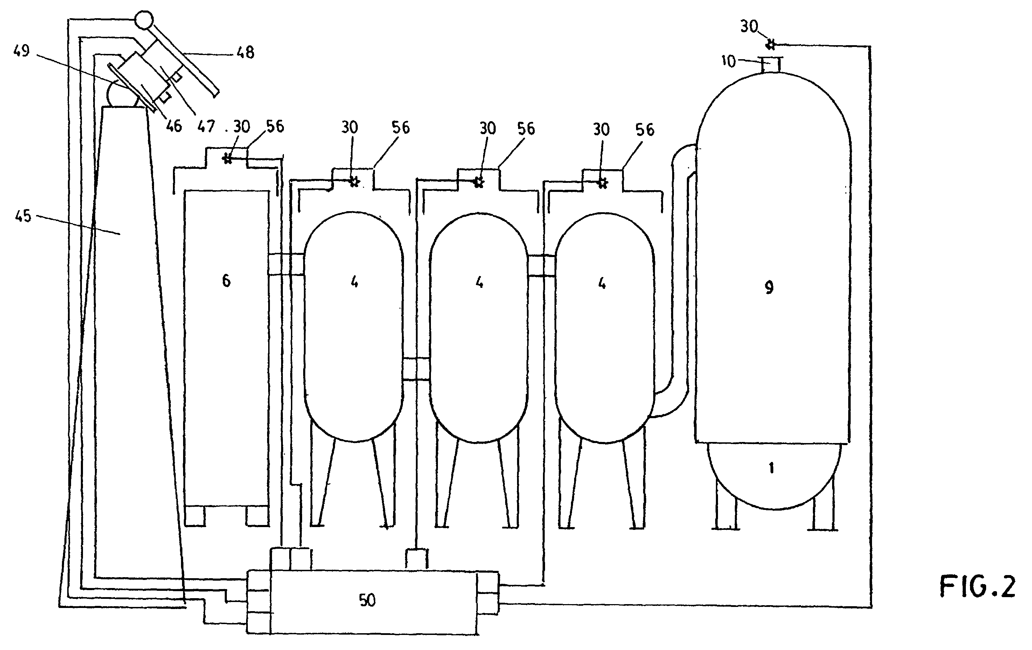

Die Überwachungsvorrichtung der Fig.2 befindet sich auf einem Turm 45. Sie besteht aus einer Videokamera 46, einer Infrarotkamera 47 und einem Richtmikrofon 48, die auf einer Verschwenkvorrichtung 49 aufgebaut sind. Mit dieser werden in zeitlicher Folge diese Sensoren nacheinander immer wieder auf die gleichen Meßpunkte gerichtet, so daß im Prozessor 50 anhand von Vergleichswerten aus früheren Messungen Auffälligkeiten der Anlage ermittelt werden können. Den einzelnen Anlagenteilen sind Geruchssensoren 30 direkt zugeordnet, welche sich unter Hauben 56 befinden, mit denen Leckgase aufgefangen werden. Diese Geruchssensoren sind an den Prozessor 50 angeschlossen. Die aus den Geruchssensoren 30 stammenden Informationen werden hier im Prozessor 50 mit den Informationen aus der Videokamera 46, der Infrarotkamera 47 und dem Richtmikrofon 48 zu einem Anlagenzustandsbericht verarbeitet.

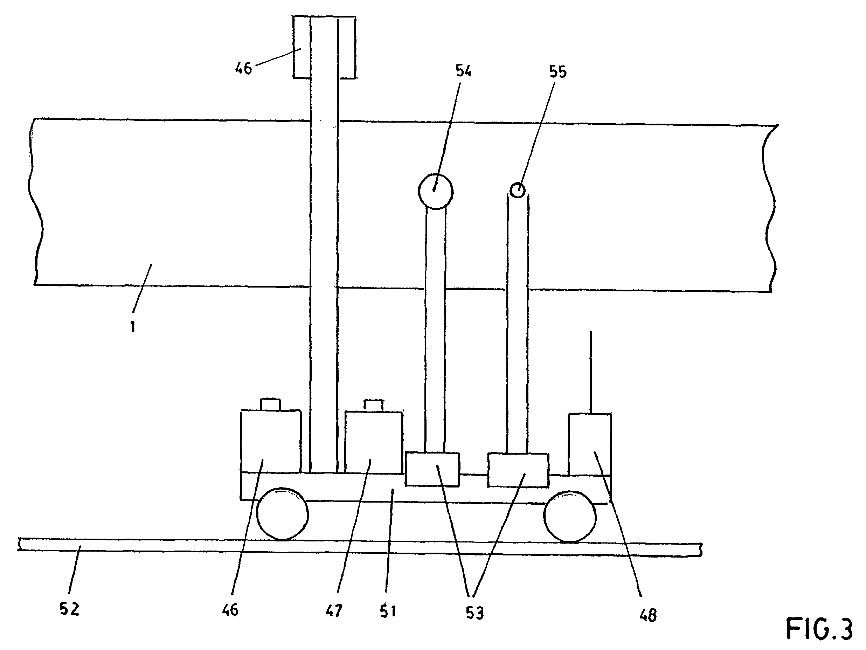

Die überwachungsvorrichtung der Fig.3 befindet sich auf einem Wagen 51, der auf Gleisen 52 längs einer Rohrleitung 3,5 fährt. Sie besteht aus einer auf dem Wagen 51 aufgebauten Videokamera 46 sowie einer weiteren, an einem Träger 57 installierten Videokamera, einer Infrarotkamera 47 und aus einem von einem Verschwenkarm einer Verschwenkvorrichtung 53 getragenen Körperschallmikrofon 54 und einem ebenfalls von dem Verschwenkarm einer Verschwenkvorrichtung 53 getragenen Temperaturfühler 55. Die Informationen aus diesen Sensoren und fühlern werden mittels eines Senders an einen Prozessor 50 weitergeleitet. Mit dieser Vorrichtung werden in zeitlicher Folge diese Sensoren immer wieder auf unterschiedliche Meßpunkte gerichtet, so daß im Prozessor 50 anhand von Vergleichswerten aus früheren Messungen Auffälligkeiten der Anlage ermittelt werden können.

Die Erfindung schafft somit die Möglichkeit, sofort unter Angabe des Ortes und des Ereignisses Problemfelder definieren zu können, Gegenmaßnahmen ohne Zeitverlust und gezielt treffen zu können, den Zugang zu kritischen Zonen zu verhindern und damit Gesundheit und Sicherheit von Überwachungspersonal zu erhöhen, die Umwelt durch rechtzeitiges Handeln zu schonen.

Als Einzelelemente fungieren Sensoren und Systeme für gezielte Wahrnehmungen. Die Auswertung dieser Wahrnehmungen geschieht einzeln und integriert in Abhängigkeit voneinander. Erst damit wird eine fundierte gesicherte Aussage möglich und notwendige Handlungen entsprechend ausgelöst.

Im Bereich der Erdgasproduktion erfolgt eine kontinuierliche Überwachung der gasführenden Anlagenteile auf Beeinflussungen, wie Fremdeinflüsse durch unbefugte Personen oder Naturereignisse, Gasundichtigkeiten, sichtbar durch Eisbildung an Anlagenteilen, Emissionen bei Schlierenbildung und Flüssigkeitsansammlungen sowie eine vorbeugende Erkennung von Anlagenausfällen durch Aufnahme und Auswertung von Wärmezuständen.

Die akustischen Abhörgeräte, soweit sie auf den Luftschall ausgerichtet sind, sind so in der Anlage angeordnet, daß eine Erfassung und Beurteilung der Betriebs- und Sonderzustände der Anlagen durch Schallanalysen aussagefähig wird. Diese Sensoren erlauben eine akustische Erkennung bei unbefugtem Betreten, von Gasundichtigkeiten, von unregelmäßigen Anlagenzuständen wie Lagerschäden, Pumpenstörungen etc. sowie eine klare Trennung zwischen Anlagen- und Umgebungsgeräuschen.

Geräte zur Erfassung von Körperschall nehmen darüber hinaus Unregelmäßigkeiten im Maschinenlauf und im Anlagenzustand auf und geben sie zur zentralen Auswertung weiter. Mit den akustischen Nachweisgeräten und der nachgeschalteten zentralen Auswerteeinheit werden keine Einzeltöne auf Grenzwertüberschreitung überwacht, sondern es wird ein Gesamtbild des Geräuschfeldes (Frequenzspektrum) in der Anlage aufgenommen und mit den jeweiligen Folgebildern verglichen. Aus den Veränderungen dieser Geräuschbilder bezüglich Intensität und Spektralverteilung (auch Fouriertransformiert) wird auf den technischen Zustand der Anlage geschlossen. Das Ergebnis besteht nun darin, die gewollten Veränderungen von den ungewollten zu unterscheiden.

Mit den Sensoren "Riechen" wird bei kleinsten Ansprechschwellen Alarm gegeben und somit bereits vor Erreichen von menschlichen Geruchsschwellen Gegenhandlungen zugelassen. Somit können bereits kleinste Leckagen und Emissionen identifiziert werden. Die grundsätzliche Neuerung des Verfahrens liegt neben der sensiblen Sensortechnik vor allem in der Auswerteprozedur, die andere Geruchseinflüsse erkennt und nur dann alarmiert, wenn das zu kontrollierende Medium der Anlage selbst die Ursache der Alarmaktivierung ist.

Die große Verbindlichkeit der Aussagen über den Zustand der Prozeßanlage wird endgültig erst mit der logischen Verknüpfung der einzelnen Überwachungskomponenten erreicht. So wird bei Ansprechen eines Geruchssensors die Kamera in Richtung des ersten angesprochenen Sensors gefahren und z.B. der Austritt eines Mediums durch Sichten des Ereignisses oder durch Messungen von partielle Temperaturänderungen bestätigt und gleichzeitig eine Lokalisierung vorgenommen. Das Wartungspersonal kann sich besser auf das Ereignis einstellen. Mit den akustischen Gebern werden neben Austrittsgeräuschen eines Mediums auch Veränderungen im Prozeßablauf oder veränderte Geräusche an Maschinen und Ventilen aufgenommen und einer Auswertung zugeführt. Auch hier werden Aussagen unter Einbeziehung der anderen Überwachungsgrößen "Geruch" und "Optik" verifiziert und bestätigt.

Die Datenerfassung und -verarbeitung nimmt die Meßergebnisse (bewertet oder unbewertet) der einzelnen Meßkomponenten entgegen, um Vor- oder/und Hauptalarme zu erzeugen, Schaltaktionen einzuleiten und auch eine Bedieneroberfläche bereitzustellen. In der Zentrale werden die einzelnen Meßkomponenten einer Plausibilitätsprüfung unterzogen, bevor es zu einer Darstellung der erreichten Alarmschwellen, zur Feststellung der Betriebszustände der Anlage und zur Vorgabe von Maßnahmen kommt. Die Verknüpfung der lokalen Sensoren oder Auswerteeinheiten mit dem übergeordneten Überwachungssystem erfolgt über gesicherte Fernwirksysteme.

Mit diesem neuen technischen System können folgende Vorteile erwirkt werden:
* die zyklische Befahrung der Anlagen durch Wartungspersonal wird durch eine kontinuierliche Überwachung "rund um die Uhr" ersetzt,
* Fehler werden so im Entstehen erkannt und verhindern oder minimieren Schäden an Anlagen und Emissionen,
* Bedienungspersonal wird vor Betreten der Anlagen vor möglichen Gefahren gewarnt,
* Wartungspersonal kann schneller ausgebildet werden, da der Erfahrungszeitraum kürzer wird - das schafft mehr Flexibilität und verbessert die Motivation,
* wenige Fachleute können so große Bereiche durch Kontrollen abdecken und gezielte Einsätze vorgeben,
* Eingriffe von außen (Vandalismus) können sofort erkannt werden und Täter können identifiziert werden,
* nach Wartungsarbeiten und Reparaturen kann neben den Routinekontrollen auf einen weiteren automatischen "Check" des Anlagenzustandes zurückgegriffen werden.

### Liste der Bezugszeichen

- 1: Reaktor
- 2: Rohr
- 3: Rohrleitung
- 4: Kessel
- 5: Rohrleitung
- 6: Konditioniergefäß
- 7: Leitung
- 8: Verdichter
- 9: Schutzglocke
- 10: Stutzen
- 11: Geruchssensor
- 12: Körperschallmikrofon
- 13: Vergleichsmikrofon
- 14: Geruchssensor
- 15: Körperschallmikrophon
- 16: Geruchssensor
- 17: Temperaturfühler
- 18: Körperschallmikrofon
- 19: Temperaturfühler
- 20: Signalumsetzer
- 21: Signalumsetzer
- 22: Signalumsetzer
- 23: Signalumsetzer
- 24: Signalumsetzer
- 25: Signalumsetzer
- 26: Signalumsetzer
- 27: Signalumsetzer
- 28: Signalumsetzer
- 29: Signalumsetzer
- 30: Geruchssensor
- 31: Speicher
- 32: Speicher
- 33: Speicher
- 34: Speicher
- 35: Speicher
- 36: Speicher
- 37: Speicher
- 38: Speicher
- 39: Speicher
- 40: Videokamera
- 41: Wagen
- 42: Signalumsetzer
- 43: Sprühgerät
- 44: Signalumsetzer
- 45: Turm
- 46: Videokamera
- 47: Infrarotkamera
- 48: Richtmikrofon
- 49: Verschwenkvorrichtung
- 50: Prozessor
- 51: Wagen
- 52: Gleis
- 53: Verschwenkvorrichtung
- 54: Körperschallmikrofon
- 55: Temperaturfühler
- 56: Haube
- 57: Träger

## Patentansprüche

1. Verfahren zur Überwachung von Anlagen der chemischen Industrie,
bei dem man mittels akustischen Sensoren, Kameras und elektronischen Geruchssensoren elektronische Daten erzeugt und diese einer Auswertvorrichtung mit Vergleichsschaltkreisen, Speichern elektronisch erfaßter Daten und Anzeige- sowie Meldevorrichtungen zuführt, in denen man die temporär erfaßten elektronischen Meßwerte mit Meßwerten einer Anfangsmessung und der vorhergehenden Messung vergleicht und bei Überschreiten vorgegebener Abweichungswerte einen Meldevorgang auslöst.

2. Verfahren nach Anspruch 1,
bei dem man die Messung und Auswertung in bestimmten Zeitabständen ausführt,
und/oder
bei dem man den Standort der akustischen Sensoren, Kameras und/oder elektronischen Geruchssensoren nach jeder Messung wechselt.

3. Verfahren nach Anspruch 1,
bei dem man die aus den akustischen Sensoren, Kameras und elektronischen Geruchssensoren erhaltenen elektronischen Meßwerte vor der Zuführung in die Auswertstation mit aus akustischen Vergleichs-Sensoren, -Kameras und elektronischen Geruchssensoren erhaltenen elektronischen Meßwerten korrigiert.

4. Verfahren nach Anspruch 1,
bei dem man als Kameras Infrarot-Kameras verwendet und in der Auswertanlage Stellen erhöhter oder erniedrigter Temperatur identifiziert.

5. Verfahren nach Anspruch 1,
bei dem man Kameras und/oder Videokameras u.a. zur Identifizierung von Fremdeinflüssen, Personen, Naturereignissen, Flüssigkeitsansammlungen u.a. verwendet.

6. Verfahren nach Anspruch 1,
bei dem man einen mit Mikrophonen bestückten Kunstkopf zur Identifizierung der Geräuschrichtung in Anwendung bringt
und/oder
bei dem man als akustische Sensoren Körperschallmikrophone verwendet, die an Rohren, Maschinen, Lagern, Pumpen, Druckerzeugern und ähnlichen Anlagenteilen angebracht sind,
und/oder
bei dem man als akustische Sensoren Richtmikrophone verwendet, die auf bestimmte Anlagenteile gerichtet sind oder deren Wirkrichtung neben bestimmten Anlagenteilen verläuft.

7. Verfahren nach Anspruch 1,
bei dem man bei Meldung einer Auffälligkeit den Ablauf des automatisch ablaufenden Meßverfahrens unterbricht und Meßgeräte, insbesondere eine Infrarot- und oder Videokamera durch Hand- oder Automatiksteuerung zu der als auffällig gemeldeten Stelle fährt.

8. Verfahren nach Anspruch 6 und/oder 7,
bei dem man auf die als auffällig gemeldete Stelle eine Kontrollsubstanz aufträgt.

9. Überwachungsvorrichtung von Anlagen der chemischen Industrie,
bestehend aus akustischen Sensoren, Kameras, elektronischen Geruchssensoren und einer Auswertvorrichtung mit Vergleichsschaltkreisen, Speichern elektronisch erfaßter Daten und Anzeige- und/oder Meldevorrichtungen, wobei die Auswertvorrichtung Vergleichsschaltungen aufweist, in denen die temporär erfaßten elektronischen Meßwerte mit Meßwerten einer Anfangsmessung und der vorhergehenden Messung verglichen werden und bei Überschreiten vorgegebener Abweichungswerte ein Meldevorgang ausgelöst wird.

10. Vorrichtung nach Anspruch 9,
mit einer Schaltung zur Auslösung der Meßvorgänge an verschiedenen Orten der zu überwachenden Anlage in bestimmten Zeitabständen
und/oder
mit einer Schaltung zur ständig wiederholten Auslösung des Meßzyklus.

11. Vorrichtung nach Anspruch 9,
mit verfahr-, verschieb- und/oder verschwenkbaren Trägern der Mikrophone, Kameras und/oder elektronischen Geruchsmelder und einer Schaltung für die Veränderung des Meßortes zwischen je zwei Messungen.

12. Vorrichtung nach Anspruch 9,
mit einer Korrekturschaltung, die einerseits an die der Überwachung der Anlagenteile dienenden akustischen Sensoren, Kameras und elektronischen Geruchssensoren und andererseits an akustischen Vergleichssensoren, Vergleichskameras und elektronischen Vergleichsgeruchsmeldern angeschlossen ist.

13. Vorrichtung nach Anspruch 9,
mit Infrarot-Kameras für die Identifizierung von Stellen erhöhter oder erniedrigter Temperatur in der Auswertanlage
und/oder
mit Körperschallmikrophonen, die an Rohren, Maschinen, Lagern, Pumpen, Druckerzeugern und ähnlichen Anlagenteilen angebracht sind
und/oder
mit einem mit Mikrophonen bestückten Kunstkopf zur Feststellung der Richtung, aus der der Schall kommt
und/oder
mit Richtmikrophonen, die auf bestimmte Anlagenteile gerichtet sind oder deren Wirkrichtung neben bestimmter Anlagenteile verläuft.

14. Vorrichtung nach Anspruch 9,
mit einer Schaltung, bei der bei Meldung einer Auffälligkeit der Ablauf des automatisch ablaufenden Meßverfahrens unterbrechbar ist und Meßgeräte, insbesondere eine Infrarot- und oder Videokamera durch Handsteuerung zu der als auffälig gemeldeten Stelle fahrbar sind.

15. Vorrichtung nach Anspruch 14,
mit einem Speicher und einer Auftragevorrichtung für eine Kontrollsubstanz.

16. Vorrichtung nach Anspruch 9,
mit Schienen für Fahrzeuge, welche Meß- und Beobachtungsgeräte tragen
und/oder mit bewegbaren Trägern der Meßaufnehmer der Sensoren.

17. Vorrichtung nach Anspruch 9,
bei der Sensoren in explosiv gefährdeten Bereichen angeordnet sind
und/oder
mit visuellen Sensoren zur Feststellung von Personen und Gegenständen.

## Claims

1. Process for monitoring facilities of the chemical industry,
in which by means of acoustic sensors, cameras and electronic odor sensors electronic data are generated and these are supplied to an evaluation device with comparison circuitry, memories for electronically acquired data and display as well as report-generating devices, in which the temporary acquired electronic measurement values are compared with measurement values of an initial measurement and the preceding measurement and, in the event given deviation values are exceeded, a report process is triggered.

2. Process as claimed in claim 1,
in which the measurement and evaluation is carried out at specific time intervals,
and/or
in which the location of the acoustic sensors, cameras and/or electronic odor sensors is changed after each measurement.

3. Process as claimed in claim 1,
in which the electronic measurement values obtained from the acoustic sensors, cameras and electronic odor sensors, before they are supplied to the evaluation station, are corrected with electronic measurement values obtained from acoustic comparison sensors, cameras and electronic odor sensors.

4. Process as claimed in claim 1,
in which infrared cameras are use as the cameras and in the evaluation facility locations of increased or decreased temperature are identified.

5. Process as claimed in claim 1,
in which cameras and/or video cameras are used *inter alia* for identifying outside influences, persons, natural events, fluid accumulations and the like.

6. Process as claimed in claim 1,
in which an artificial head equipped with microphones is applied for the identification of the direction of the sound
and/or
in which as acoustic sensors solid-structure microphones are used which are disposed on pipes, machines, bearings, pumps, pressure generators and similar facility parts,
and/or
in which as acoustic sensors directional microphones are used which are directed to specific facility parts or whose effective direction extends next to specific facility parts.

7. Process as claimed in claim 1,
in which, upon the report of a spuriousness, the flow of the automatically running measurement process is interrupted and measuring instruments, in particular an infrared and/or video camera, are moved by manual or automatic control to the location which has been reported as suspicious.

8. Process as claimed in claim 6 and/or 7,
in which onto the site having been reported as being suspicious a control substance is applied.

9. Monitoring device of facilities of the chemical industry,
comprising acoustic sensors, cameras, electronic odor sensors and an evaluation device with comparison circuitry, memories for electronically acquired data and display and/or report-generating devices, wherein the evaluation device comprises comparison circuitry in which the temporary acquired electronic measurement values are compared with measurement values of an initial measurement and the preceding measurement and, in the event given deviation values are exceeded, a report process is triggered.

10. Device as claimed in claim 9,
with a circuit for initiating the measurement processes at different locations of the facility to be monitored at specific time intervals
and/or
with a circuit for the continuously repeated initiation of the measurement cycle.

11. Device as claimed in claim 9,
with movable, displaceable and/or pivotable supports of the microphones, cameras and/or electronic odor indicator and a circuit for changing the measurement locations between each two measurements.

12. Device as claimed in claim 9,
with a correction circuit which, on the one hand, is connected to the acoustic sensors, cameras and electronic odor sensors serving for monitoring the facility parts and, on the other hand, to acoustic comparison sensors, comparison cameras and electronic comparison odor indicators.

13. Device as claimed in claim 9
with infrared cameras for the identification of sites of increased or reduced temperature in the evaluation facility
and/or
with solid-structure microphones which are disposed on pipes, machines, bearings, pumps, pressure generators and similar facility parts,
and/or
with an artificial head equipped with microphones for detecting the direction from which the sound comes,
and/or
with directional microphones which are directed toward specific facility parts or whose effective direction extends next to specific facility parts.

14. Device as claimed in claim 9,
with a circuit in which, upon the report of a spuriousness, the flow of the automatically running measurement process can be interrupted and measuring instruments, in particular an infrared and/or video camera, can be moved by manual control to the site reported as spurious.

15. Device as claimed in claim 14,
with a memory and an application device for a control substance.

16. Device as claimed in claim 9,
with tracks for vehicles supporting measurement and observation instruments and/or with movable supports of the measurement recorders of the sensors.

17. Device as claimed in claim 9,
in which sensors are disposed in areas endangered by explosions
and/or
with visual sensors for detecting persons and objects.

## Revendications

1. Procédé de surveillance d'installations industrielles chimiques,
dans lequel des données électroniques sont produites au moyen de capteurs acoustiques, de caméras et de capteurs olfactifs électroniques, et ces données sont fournies à un dispositif d'évaluation avec des circuits de comparaison, la mise en mémoire des données saisies électroniquement, et des dispositifs de visualisation et de signalisation, dans lesquels les valeurs de mesure électroniques saisies temporairement sont comparées aux valeurs de mesure d'une mesure initiale et de la mesure précédente, et un procédé de signalisation est déclenché en cas de dépassement de valeurs de tolérance prédéfinies.

2. Procédé selon la revendication 1,
dans lequel la mesure et l'évaluation sont réalisées à des intervalles de temps précis,
et/ou
dans lequel l'emplacement des capteurs acoustiques, des caméras et/ou des capteurs olfactifs électroniques est modifié après chaque mesure.

3. Procédé selon la revendication 1,
dans lequel les valeurs de mesure électroniques obtenues à partir des capteurs acoustiques, des caméras et des capteurs olfactifs électroniques sont corrigées avant l'envoi à la station d'évaluation par des valeurs de mesure électroniques obtenues à partir des capteurs acoustiques, des caméras et des capteurs olfactifs électroniques de comparaison.

4. Procédé selon la revendication 1,
dans lequel on utilise comme caméras des caméras infrarouges, et des lieux de température élevée ou réduite sont identifiés dans l'installation d'évaluation.

5. Procédé selon la revendication 1,
dans lequel on utilise des caméras et/ou des caméras vidéo entre autres pour l'identification d'influences étrangères, de personnes, d'événements naturels, d'accumulations de liquide, etc..

6. Procédé selon la revendication 1,
dans lequel on utilise une tête artificielle équipée de microphones pour l'identification du sens des bruits
et/ou
dans lequel on utilise comma capteurs acoustiques des microphones de bruita de structure qui sont posés sur les tuyaux, les machines, les paliers, les pompes, les générateurs de pression et les parties d'installation semblables,
et/ou
dans lequel on utilise comme capteurs acoustiques des microphones directifs qui sont orientés vers des parties précises des installations ou dont la direction de circulation passe à proximité de parties précises des installations.

7. Procédé selon la revendication 1,
dans lequel on interrompt, en cas de signalisation d'un événement inhabituel, le déroulement du procédé de mesure se déroulant automatiquement, et on dirige les appareils de mesure, en particulier une caméra infrarouge et/ou une caméra vidéo, par commande manuelle ou automatique vers l'emplacement signalé comme inhabituel.

8. Procédé selon la revendication 6 et/ou 7,
dans lequel on applique une substance de contrôle sur l'emplacement signalé comme inhabituel.

9. Dispositif de surveillance d'installations industrielles chimiques,
comprenant des capteurs acoustiques, des caméras, des capteurs olfactifs électroniques et un dispositif d'évaluation avec des circuits de comparaison, la mise en mémoire des données saisies électroniquement, et des dispositifs de visualisation et/ou de signalisation, dans lesquels le dispositif d'évaluation comporte des circuits de comparaison dans lesquels les valeurs de mesure électroniques saisies temporairement sont comparées aux valeurs de mesure d'une mesure initiale et de la mesure précédente, et un procédé de signalisation est déclenché en cas de dépassement de valeurs de tolérance prédéfinies.

10. Dispositif selon la revendication 9,
avec un circuit pour le déclenchement des procédés de mesure à différente endroits de l'installation à surveiller à des intervalles de temps précis
et/ou
avec un circuit pour le déclenchement sans cesse répété du cycle de mesure.

11. Dispositif selon la revendication 9,
avec supports déplaçables, coulissants et/ou orientables des microphones, caméras et/ou avertisseurs olfactifs électroniques et avec un circuit pour la modification du lieu de mesure toutes les deux mesures.

12. Dispositif selon la revendication 9,
avec un circuit de commutation de correction qui est raccordé d'une part aux capteurs acoustiques, aux caméras et aux capteurs olfactifs électroniques qui servent à la surveillance des parties des installations, et d'autre part aux capteurs acoustiques de comparaison, aux caméras de comparaison et aux avertisseurs olfactifs électroniques de comparaison.

13. Dispositif selon la revendication 9,
avec caméras infrarouges pour l'identification des lieux de température élevée ou réduite dans l'installation d'évaluation
et/ou
avec des microphones de bruits de structure qui sont posés sur les tuyaux, les machines, les paliers, les pompes, les générateurs de pression et les parties d'installation semblables
et/ou
avec une tête artificielle équipée de microphones pour la constatation du sens de provenance du son
et/ou
avec des microphones directifs qui sont orientés sur des parties précises des installations ou dont la direction de circulation passe à proximité de parties précises des installations.

14. Dispositif selon la revendication 9,
avec un circuit dans lequel, lors de la signalisation d'un événement inhabituel, le déroulement du procédé de mesure se déroulant automatiquement peut être interrompu et les appareils de mesure, en particulier une caméra infrarouge et/ou une caméra vidéo, peuvent être déplacés par commande manuelle vers l'emplacement signalé comme inhabituel.

15. Dispositif selon la revendication 14,
avec une mise en mémoire et un dispositif d'application pour une substance de contrôle.

16. Dispositif selon la revendication 9,
avec des rails pour les véhicules qui portent les appareils de mesure et d'observation
et/ou avec des supports mobiles des enregistreurs de mesure des capteurs.

17. Dispositif selon la revendication 9,
dans lequel des capteurs sont placés dans des zones présentant des risques d'explosion
et/ou
avec des capteurs visuels pour la constatation des personnes et des objets.
